(19) Europäisches Patentamt

European Patent Office

Office européen des brevets

(11) **EP 4 167 311 A1**

(12) **EUROPEAN PATENT APPLICATION**

(43) Date of publication:
**19.04.2023 Bulletin 2023/16**

(21) Application number: **21202798.1**

(22) Date of filing: **15.10.2021**

(51) International Patent Classification (IPC):
**H01M 4/131** (2010.01)     **H01M 4/48** (2010.01)

(52) Cooperative Patent Classification (CPC):
**H01M 4/48; H01M 4/131;** H01M 2004/028

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Belenos Clean Power Holding AG 2502 Bienne (CH)**

(72) Inventor: **METTAN, Yoann 1902 Evionnaz (CH)**

(74) Representative: **ICB SA Faubourg de l'Hôpital, 3 2001 Neuchâtel (CH)**

(54) **ACTIVE MATERIAL FOR AN ELECTRODE FOR A BATTERY CELL AND METHOD FOR MANUFACTURING THEREOF**

(57)     The present invention discloses an active material for an electrode for a battery cell, wherein the active material comprises $H_{2-x}V_3O_8$, wherein x is between 0.01 and 0.99. The present invention further discloses a method for producing an active material for an electrode comprising a step of oxidation of $H_2V_3O_8$, thereby obtaining $H_{2-x}V_3O_8$, wherein x is between 0.01 and 0.99, as the active material, wherein the oxidation is performed at a temperature between 80°C and 150°C, preferably between 100°C and 130°C.

**Fig. 3**

EP 4 167 311 A1

Processed by Luminess, 75001 PARIS (FR)

**Description**

Technical Field

The present invention relates to an active material for an electrode for a battery or battery cell. The present invention further relates to an electrode comprising the active material, and to a battery or battery cell comprising such an electrode. The present invention further relates to a method for producing an active material for an electrode for a battery or battery cell.

Background Art

Nowadays, rechargeable batteries are well known. However, the current generation of rechargeable batteries still have several disadvantages, such as high weight, low capacity, slow charging and fast ageing, i.e. a fast reduction of properties such as capacity and energy density after repeated charging/discharging cycles.

Inorganic materials, in particular ceramics, are often used in batteries and battery cells. One particular example of an inorganic material is $H_2V_3O_8$, typically used in the form of fibres, such as nanofibres. $H_2V_3O_8$ is a compound known since the 1960's - 1970's and its structure was partially analysed in the 1990's, with exception of the position of the hydrogen atoms (the protons). The position of the protons was partially analysed in 2015.

$H_2V_3O_8$ is capable to reversibly exchange large amounts of alkali metals ions and transition metals ions, in particular lithium (Li), sodium (Na), potassium (K), magnesium (Mg) and zinc (Zn). This makes it an interesting compound for use as active material in metallic-ion batteries, such as Li-ion batteries and Mg-ion batteries (MIBs).

$H_2V_3O_8$ as active material contributes to the capacity of the battery and it has a high rate capability. For example, in lithium-based batteries, a capacity higher than 400 mAh/g can be achieved. In MIBs an initial discharge capacity of 231 mAh/g at 60°C can be obtained, as well as an average discharge voltage of approx. 1.9V vs $Mg/Mg^{2+}$ in an electrolyte of 0.5M Mg(ClO4)2 in acetonitrile, resulting in a high energy density of 440 Wh/kg.

EP2698854 discloses a method to produce a particle based electrode material comprising (partially lithiated) $H_2V_3O_8$ which is pyrolized to obtain the active material.

US2017/0250449 discloses the use of $H_2V_3O_8$ and of $Zn_{0.25}V_2O_5.H_2O$ as active material for cathodes for rechargeable zinc-ion batteries comprising an aqueous electrolyte. In paragraph [0081] it is reported that $H_2V_3O_8$ has a lower structural rigidity and flexibility than $Zn_{0.25}V_2O_5.H_2O$, leading to a slightly poor retention of the capacity upon repeated charging/discharging cycles.

One of the disadvantages of $H_2V_3O_8$ is a limited chemical stability, resulting in a poor electrochemical stability over time during repeated charging/discharging (cycling stability). In other words, it has been noticed that the volume changes related to the reversible exchange of the metals in the battery upon repeated charging/discharging damage the $H_2V_3O_8$ material over time. This leads to a significant reduction of the capacity of the battery cell over time.

Nowadays it is known that the structure of $H_2V_3O_8$ comprises exchangeable protons in the orthorhombic lattice structure. The nature of the protons (hydrogen atoms) can be described as ranging from water-like moiety to itinerant proton. Although a certain amount of hydrogen is necessary to keep the orthorhombic structure intact, two hydrogen atoms per formula unit means that one vanadium atom is locked as 4+ ion, i.e. having an oxidation state of 4+. Compared to a vanadium atom having the oxidation state 5+, an oxidation state of 4+ means one less equivalent of an alkali metal (e.g. lithium) to intercalate, and thus a lower capacity of the battery cell.

Further disadvantages of $H_2V_3O_8$ are that the exchangeable protons can cause corrosion and/or dissolution of the active material, corrosion of the current collector, and poisoning of the electrolyte and the anode. A consequence of such damages is the reduction of the capacity of the battery cell.

EP2784847 discloses chemically lithiated $H_2V_3O_8$, $Li_xH_{2-x}V_3O_8$, wherein x is between 0.1 and 1.5, preferably close to 1.5. The surface of the chemically lithiated $H_2V_3O_8$ is treated with $Al(OH)_3$, for example by means of deposition of a coating, to improve the cycling stability of a cathode comprising the coated chemically lithiated $H_2V_3O_8$ as active material. A disadvantage of the method to obtain the chemically lithiated $H_2V_3O_8$, $Li_xH_{2-x}V_3O_8$, is that the lithiation and dehydrogenation are carried out in two separate process steps, thereby increasing the total duration for manufacturing the material.

Summary of the Invention

It is an object of the present invention to overcome one or more of the above drawbacks. It is an aim of the invention to provide an active material for an electrode for a battery cell, wherein the active material has an improved chemical stability, i.e. an improved chemical inertness. It is a further aim of the invention to provide an active material, when used in an electrode in a battery cell, having a higher capacity and a higher electrochemical stability over time than state of the art active materials, in particular wherein the capacity is stable over repeated plating/stripping of the cathode and over repeated charging/discharging of the battery cell.

It is a further aim of the present invention to provide a method for producing an active material for an electrode for a battery cell, wherein the method is less complex and/or requires a reduced processing duration or time.

According to a first aspect of the invention, there is provided an active material for an electrode for a battery cell as disclosed in the appended claims.

The active material comprises $H_{2-x}V_3O_8$, wherein x is between 0.01 and 0.99. Advantageously, x is between 0.20 and 0.99, such as between 0.21 and 0.99, or between 0.25 and 0.95.

According to a second aspect of the invention, there is provided an electrode as disclosed in the appended claims. Advantageously, the electrode is an electrode for a battery cell. The electrode can be a cathode or an anode. The electrode comprises the active material of the first aspect of the invention. Advantageously, the electrode comprises between 50% and 99% by weight of the active material based on the total weight of the electrode, preferably between 75% and 95% by weight.

Advantageously, the electrode further comprises an electronically conductive material, preferably a carbon-based electronically conductive material. Advantageously, the electrode comprises between 0.5% and 20% by weight of the, preferably carbon-based, electronically conductive material based on the total weight of the electrode, preferably between 2% and 10% by weight.

Advantageously, the electrode further comprises a binder. Advantageously, the electrode comprises between 0.5% and 20% by weight of the binder based on the total weight of the electrode, preferably between 1% and 10% by weight.

The present invention further provides a battery cell comprising an electrode of the invention. Advantageously, the battery cell further comprises an electrolyte, preferably a non-aqueous electrolyte. The electrolyte can be a solid electrolyte or a liquid electrolyte.

According to a third aspect of the invention, there is provided a method for producing an active material for an electrode as disclosed in the appended claims.

The method comprises a step of oxidation of $H_2V_3O_8$, thereby obtaining $H_{2-x}V_3O_8$ as active material, wherein x is between 0.01 and 0.99, such as between 0.20 and 0.99, between 0.21 and 0.99, or between 0.25 and 0.95.

Advantageously, the oxidation is performed at a temperature between 80°C and 150°C, preferably between 100°C and 130°C.

Advantageously, the oxidation of $H_2V_3O_8$ is performed in the presence of an oxidizing agent. Advantageously, the oxidizing agent is dry air.

Advantages of the active material of the present invention are, without being limited thereto, that the active material has a higher chemical stability, expressed by a higher chemical inertness, compared to prior art active materials. When used in an electrode for a battery cell, advantages of the active material of the present invention are a higher electrochemical stability over time, and a higher capacity which is maintained over repeated charging/discharging of the battery cell.

Brief Description of Drawings

Aspects of the invention will now be described in more detail with reference to the appended drawings, wherein same reference numerals illustrate same features.

- Figure 1 represents schematically the configuration of a typical coin cell.

- Figure 2 represents voltage vs. specific discharge capacity results for a single discharge cycle.

- Figure 3 represents the discharge capacity profiles of battery cells according to Fig. 1, wherein the cathode comprises as active material H2v3O8 (reference battery cell) and H2-xV3O8 (inventive battery cell), respectively.

Detailed description

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and completeness.

The invention is in particular related to battery cells comprising a metal, in particular an alkali metal or an alkaline earth metal, such as metal-ion batteries. Preferred examples of alkali metals are lithium (Li) and sodium (Na), and the corresponding metal-ion battery is a Li-ion battery (or LIB) or a Na-ion battery (or SIB), respectively. A preferred example of an alkaline earth metal is magnesium (Mg), and the corresponding metal-ion battery is a Mg-ion battery (or MIB).

The invention is further in particular related to an active material for an electrode for a battery, wherein the active material comprises vanadium (V).

It is known that for active materials comprising vanadium, when used for an electrode for metal-ion batteries, more metal ions (for example lithium ions when the battery is a Li-ion battery) can be stored in the active material when vanadium has an oxidation state of 5+ instead of an oxidation state of 4+ or even lower. This results, on battery level, in a higher open-circuit voltage, which increases the average discharge voltage and therefore the energy that can be stored by the battery.

According to the first aspect of the invention, the active material for an electrode for a battery cell comprises $H_{2-x}V_3O_8$, wherein x is between 0.01 and 0.99. such as between 0.05 and 0.99, between 0.10 and 0.99, preferably between 0.20 and 0.99, such as between 0.21 and 0.99, between 0.22 and 0.98, or between 0.25 and 0.95.

It is known in the art that $H_2V_3O_8$ has an orthorhombic crystal lattice. It is further known in the art that the vanadium atoms of $H_2V_3O_8$ have an oxidation state of 4+ or 5+, with an average ratio of 4+ to 5+ of 2 to 1. Consequently, the average oxidation state of $H_2V_3O_8$ can be considered as 4.66+. The inventors have discovered that modification of the oxidation state of the vanadium atoms in $H_2V_3O_8$ having an oxidation state of 4+ to 5+ in order to increase the average oxidation state to a value of 5+, for example by oxidation of $H_2V_3O_8$ to $HV_3O_8$, causes irreversible structural changes because of loss of the orthorhombic lattice structure of $H_{2-x}V_3O_8$.

However, the inventors have surprisingly discovered that it is possible to convert $H_2V_3O_8$ in hydrogen depleted $H_2V_3O_8$, or $H_{2-x}V_3O_8$, without modification or loss of the orthorhombic lattice structure of $H_2V_3O_8$, in particular by removal of only part of the exchangeable protons in the crystal lattice of $H_2V_3O_8$. This results in excellent chemical inertness and thus excellent chemical stability. The inventors have in particular discovered that methods of the invention allow for removal of part of these exchangeable protons present in the crystal structure of $H_2V_3O_8$. Without wishing to be bound by any theory, the inventors believe that the presence of a minimal amount of vanadium atoms having an oxidation state of 4+ is necessary to maintain the orthorhombic lattice structure of $H_2V_3O_8$.

Advantageously, $H_{2-x}V_3O_8$ has an average oxidation state between 4.67+ and 4.99+, i.e. higher than the average oxidation state of $H_2V_3O_8$ and lower than 5+ because some vanadium having an oxidation state of 4+ is still present.

According to the second aspect of the invention, there is provided an electrode for a battery cell comprising the active material of the first aspect of the invention.

Advantageously, the electrode comprises between 25% and 99.7% by weight of the active material based on the total weight of the electrode, such as between 40% and 99.5% by weight, preferably between 50% and 99% by weight, for example between 60% and 97.5% by weight, more preferably between 75% and 95% by weight.

Advantageously, the electrode further comprises an electronically conductive material. Advantageously, the electronically conductive material comprises a carbon-comprising material, such as carbon fibres, carbon nanotubes, particulate carbon (e.g. a powder), or a combination of two or more thereof. Advantageously, the electronically conductive material is a carbon-based electronically conductive material, such as graphite.

Advantageously, the electrode comprises between 0.1% and 30% by weight of the electronically conductive material based on the total weight of the electrode, such as between 0.25% and 25% by weight, preferably between 0.5% and 20% by weight, for example between 1% and 15% by weight, more preferably between 2% and 10% by weight.

Advantageously, the electrode further comprises a binder. The binder can be any binder known in the field, in particular typical binders used for active materials comprising vanadium, in particular $H_2V_3O_8$. Preferred examples of a binder are rubber, such as styrene-butadiene rubber (SBR) or latex, polyvinylidene fluoride (PVDF), and polyvinylpyrolidone (PVP), in particular high molecular weight PVP.

Advantageously, the electrode comprises between 0.1% and 30% by weight of the binder based on the total weight of the electrode, such as between 0.25% and 25% by weight, preferably 0.5% and 20% by weight, for example between 00.75% and 15% by weight, more preferably between 1% and 10% by weight.

Advantageously, the electrode further comprises a current collector. The current collector can be any current collector known in the field, such as films or foils or sheets comprising aluminium (Al) and/or titanium (Ti), such as aluminium foil and primed aluminium foil, for example aluminium foil comprising carbon black as primer.

Advantageously, the active material, the electronically conductive material and the binder are present on, i.e. deposited on or attached to, the current collector.

The electrode according to the present invention can be a cathode or an anode.

Advantageously, the active material comprised in the electrode comprises between 25% and 100% by weight of the active material of the invention based on the total weight of the active material, such as at least 30% of the active material of the invention, at least 50%, preferably at least 75%, at least 80%, more preferably at least 90%, such as at least 95%. Preferably, the active material of the electrode consists of the active material of the invention. Alternatively, the active material of the electrode can comprise the active material of the invention and one or more other active materials known in the art, for example graphite.

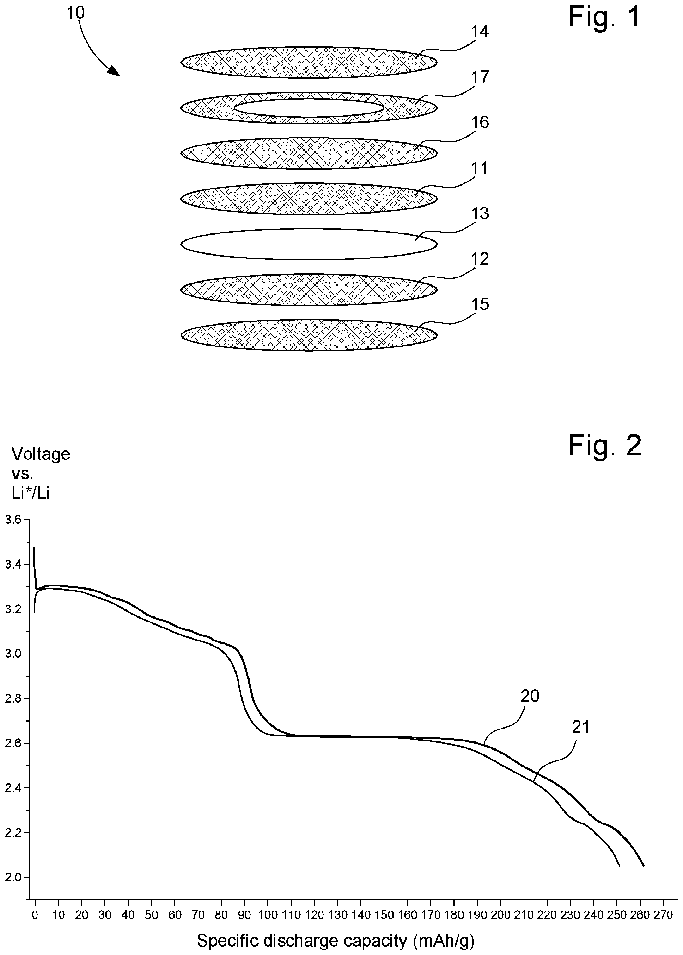

The present invention further provides a battery cell comprising an electrode of the invention. Fig. 1 represents an exemplary embodiment of a battery cell 10. The battery cell 10 has a coin-cell configuration known in the art as a CR2450 type configuration. The battery cell 10 comprises an anode 11 and a cathode 12. The battery cell 10 further comprises an electrolyte 13 between the anode 11 and the cathode 12. Advantageously, the battery cell 10 further comprises a coin cell lid 14, a coin cell base 15, a spacer 16 and a spring 17. The spacer 16 and the spring 17 provide good contact between the other components 11, 12, 13, 14, 15 of the battery cell 10.

Advantageously, the battery cell is a metal-ion battery cell, wherein the metal is an alkali metal or an alkaline earth metal. Advantageously, the alkali metal is lithium (Li) or sodium (Na). Advantageously, the alkaline earth metal is magnesium (Mg).

Advantageously, the cathode 12 or anode 11 is an electrode according to the invention and the anode 11 or cathode 12, respectively, is a standard electrode known in the field.

Advantageously, when the battery cell is a metal-ion battery cell, the electrode according to the invention (i.e. cathode 12 or anode 11) is substantially free of the metal and the other electrode (i.e. anode 11 or cathode 12, respectively) comprises the metal. The electrode comprising the metal can be a film, a foil or a sheet of the metal.

The electrolyte 13 may be a liquid electrolyte. The liquid electrolyte can comprise a binder. The electrolyte may be an ionic liquid, optionally comprising an organic component, a salt-solvent mixture, preferably a supersaturated salt-solvent mixture. For example, a liquid electrolyte may be an ionic liquid with lithium salt dissolved therein, or a mixture of an ionic liquid and an organic liquid with a dissolved lithium salt. Examples of liquids that may be used include polyethylene glycol dimethyl ether (PEG DME) or an organic solvent such as dioxolane mixed with dimethyl ether. The liquid electrolyte may comprise a compound of tetraethylene glycol dimethyl ether (PEGDME) and lithium bis(trifluorosulfonyl)imide (LiTFSI). Alternatively, the liquid electrolyte may comprise a compound of 1,2-dimethoxyethane and LiTFSI. A useful ionic liquid is methyl-butyl pyridinium trifluorosulfonyl imide (PYR14TFSI). The electrolyte may also include lithium bis(trifluoromethanesulfonyl)imide (LiTFMSI). For example, the electrolyte can be 2.2M lithium bis(trifluorosulfonyl)imide (LiFSI) in 1,2-dimethoxyethane.

Alternatively, the electrolyte 13 may be a solid state electrolyte. The solid state electrolyte can be a solid polymer or a solid inorganic material, such as a solid inorganic glass or a ceramic material, for example a garnet material. For example, the solid state electrolyte may be a lithium sulphide solid state electrolyte, preferably $Li_3PS_4$ or $Li_6PS_5Br$, or may be poly(ethylene oxide) (PEO) with salts of the metal of the battery cell (in particular lithium, sodium or magnesium) dispersed in the polymer matrix of the PEO. Alternatively, the solid state electrolyte may be a garnet ceramic, such as a lithium-stuffed garnet material, for example lithium lanthanum zirconium oxide ($Li_7La_3Zr_2O_{12}$, abbreviated as LLZO).

Yet alternatively, the electrolyte may be a gel electrolyte. A gel electrolyte may be a polymer-gelled organic medium. For example, the gel electrolyte may be a mixture of poly(methyl methacrylate) (PMMA), a lithium salt and a small amount of liquid.

Advantageously, the electrolyte 13 is a non-aqueous electrolyte.

Advantageously, when the electrolyte 13 is a liquid electrolyte or a gel electrolyte, the battery cell 10 comprises a battery separator (not shown) between the anode 11 and the cathode 12. The battery separator membrane can be a porous separator membrane. Polymeric battery separator membranes known in the field may be used, such as a porous polypropylene (PP) membrane or a porous polyethylene (PE) membrane. For example, a polypropylene membrane having a thickness of 25 μm and a porosity of 50% may be used. PP and PE are preferred materials because of their chemically inert character. However they are not easily wetted, while it is preferred that the porous separator may absorb the liquid electrolyte. To this end the hydrophobic PP and PE may be treated with a surface treatment or a coating, such as a spray coating, a dip coating or a plasma coating - atmospheric pressure plasma or low pressure plasma. Alternatively, the battery separator membrane may be a ceramic material.

According to a third aspect of the invention, there is provided a method for producing an active material for an electrode. Advantageously, the method comprises a step of oxidation of $H_2V_3O_8$, thereby obtaining $H_{2-x}V_3O_8$ as active material, wherein x is between 0.01 and 0.99, such as between 0.05 and 0.99, between 0.10 and 0.99, preferably between 0.20 and 0.99, such as between 0.21 and 0.99, between 0.22 and 0.98, or between 0.25 and 0.95.

Advantageously, hydrogen atoms are removed from $H_2V_3O_8$ during the oxidation step. Advantageously, the hydrogen atoms are removed in a chemical way.

Advantageously, the oxidation is performed at a temperature between 50°C and 200°C, such as between 75°C and 225°C, preferably between 80°C and 150°C, more preferably between 100°C and 130°C.

Advantageously, the oxidation of $H_2V_3O_8$ is performed in the presence of an oxidizing agent. In particular, the oxidizing agent is contacted with $H_2V_3O_8$.

Preferably, the oxidizing agent is a gas or a vapour, i.e. a solid or liquid oxidizing agent brought into the vapour phase. Advantageously, the oxidizing agent is dry air. Advantageously, the dry air comprises at most 2000 ppm water. Another example of an oxidizing agents is pure oxygen ($O_2$), i.e. oxygen having a purity of at least 99%, preferably at least 99.5%, more preferably at least 99.9%. Other examples of oxidizing agents are $N_2O$ and a mixture of $O_2$ and $N_2$, such as a 5/95 up to 95/5 mixture of $O_2$ and $N_2$.

Optionally, the method of the invention can be carried out in the presence of a catalyst, for example carbon black, carbon nanotubes or graphene.

The inventors have found that the methods of the invention allow for removal of only part of the hydrogen atoms of $H_2V_3O_8$, thereby maintaining the orthorhombic crystal lattice structure of $H_2V_3O_8$ is, which results in an active material having a reduction of vanadium dissolution in the battery cell, resulting in an improved chemical stability (chemical inertness).

Examples

Example 1

A mixture comprising a 1:5 ratio by weight of V2O5 and V2O3 and 6 liter deionised water was kept under constant stirring in a closed reactor vessel and was heated to 200°C for a duration of 30 minutes to 5 hours, preferably between 1 and 2 hours. The reaction mixture was then cooled to room temperature and excess water was removed by filtration. Further, any residual water in the reaction mixture was removed by vacuum drying, thereby obtaining H2V3O8.

Example 2

A reference cathode comprising $H_2V_3O_8$ of Example 1 as active material was produced. A mixture comprising 90% by weight of $H_2V_3O_8$, 5% by weight of carbon nanotubes (supplier: Cnano Technology) as electronically conductive material, and 5% by weight of high molecular weight polyvinylpyrolidone (PVP) as binder (supplier: Ashland) was prepared. The mixture was dispensed as a 40% by weight slurry in deionized water as solvent. The compound comprising the mixture in deionized water was then applied to a 20 $\mu$m thick aluminium foil as current collector, followed by drying under vacuum to remove water, thereby obtaining the reference cathode.

A cathode according to the invention was obtained by exposing (contacting) the reference cathode, comprising $H_2V_3O_8$ as active material, to a flow of dry air for a duration between 1 hour and 48 hours, preferably about 10 hours, at a temperature between 80°C and 150°C, preferably about 120°C. $H_2V_3O_8$ was oxidized by the oxygen in the dry air according to the following equation (I)

$$H_2V_3O_8 + 0.25x\,O_2 \rightarrow H_{2-x}V_3O_8 + 0.5x\,H_2O \qquad (I)$$

CR2450 coin cell batteries according to Figure 1 were prepared using the cathode of Example 2 (reference battery cell) and the cathode of Example 3 (inventive battery cell), respectively. A 200 $\mu$m thick lithium metal foil was used as the anode. 2.2 M lithium bis(trifluorosulfonyl)imide (LiFSI, supplied by Nippon Shokubai) in 1,2-dimethoxyethane (supplier: Merck) was used as liquid electrolyte. Two layers of Teijin MFS FZA1601 (supplier: Teijin Lielsort Korea) were used as battery separator to separate the cathode from the anode. The battery cells were sealed with a pneumatic press using a pressure of 80 MPa.

Example 3

The obtained battery cell according to the invention and the reference battery cell were subjected to repeated charging/discharging at 25°C. The specific discharge capacity was measured for each charge/discharge cycle.

Fig. 2 shows the voltage vs. Li+/Li versus the specific discharge capacity for the first discharge cycle at 0.26 mA/g specific current for the reference battery cell (21) and the inventive battery cell (20), corresponding to a discharge duration of 10 hours. The open circuit voltage, i.e. the voltage vs. Li+/Li measured at 100% state of charge (100% SOC), of the reference battery cell was 3.3 V vs. Li+/Li, whereas the battery cell comprising the cathode of the invention had an open circuit voltage of 3.5V vs. Li+/Li. From Fig. 2 it is further clear that for a certain voltage the inventive battery cell shows a higher specific discharge capacity than the reference battery cell. In other words, for a certain specific discharge capacity a higher voltage is measured for the inventive battery cell than for the reference battery cell.

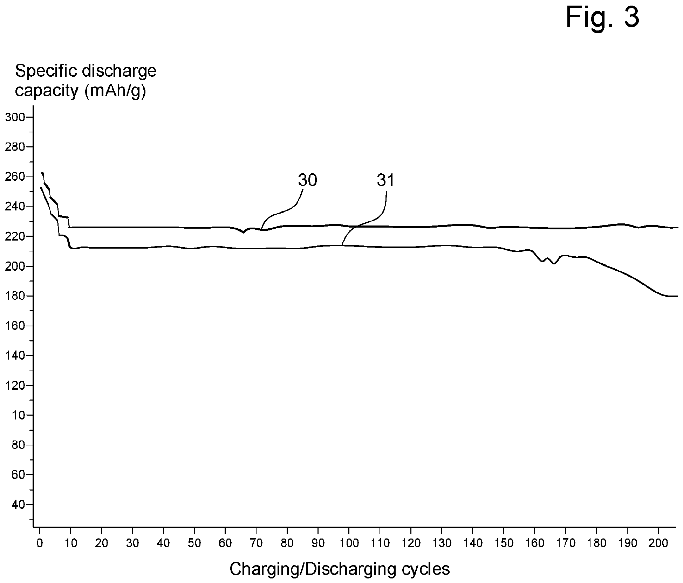

Fig. 3 shows the specific discharge capacity results as function of the number of charge/discharge cycles, up to 200 cycles, for the battery cell according to the invention (30) and the reference battery cell (31). A specific current of 2.6 mA/g, wherein g represents the mass in gram of the cathode active material, is applied to the battery cell during a discharge duration of 1 hour. It is clear from Fig. 3 that the specific discharge capacity of the battery cell according to the invention (30) is at any time higher than the capacity of the reference battery cell (31). Further, while the specific discharge capacity of the reference batter cell starts to decrease after 150 charge/discharge cycles, the specific discharge capacity of the battery cell of the invention remains stable up to (at least) 200 cycles.

**Claims**

1. Active material for an electrode for a battery cell, **characterized in that** the active material comprises $H_{2-x}V_3O_8$, wherein x is between 0.01 and 0.99.

2. Active material according to claim 1, wherein x is between 0.20 and 0.99.

3. Active material according to claim 2, wherein x is between 0.21 and 0.99.

4. Active material according to claim 2 or claim 3, wherein x is between 0.25 and 0.95.

5. Electrode comprising the active material according to any one of claims 1 to 4.

6. Electrode according to claim 5, comprising between 50% and 99% by weight of the active material based on the total weight of the electrode, preferably between 75% and 95% by weight.

7. Electrode according to claim 5 or claim 6, further comprising a carbon-based electronically conductive material.

8. Electrode according to claim 7, comprising between 0.5% and 20% by weight of the carbon-based electronically conductive material based on the total weight of the electrode, preferably between 2% and 10% by weight.

9. Electrode according to any one of claims 5 to 8, further comprising a binder.

10. Electrode according to claim 9, comprising between 0.5% and 20% by weight of the binder based on the total weight of the electrode, preferably between 1% and 10% by weight.

11. Battery cell comprising the electrode according to any one of claims 5 to 10.

12. Battery cell according to claim 11, further comprising a non-aqueous electrolyte.

13. Method for producing an active material for an electrode comprising a step of oxidation of $H_2V_3O_8$, thereby obtaining $H_{2-x}V_3O_8$, wherein x is between 0.01 and 0.99, as the active material, **characterized in that** the oxidation is performed at a temperature between 80°C and 150°C, preferably between 100°C and 130°C.

14. Method according to claim 13, wherein the oxidation of $H_2V_3O_8$ is performed in the presence of an oxidizing agent.

15. Method according to claim 14, wherein the oxidizing agent is dry air.

Fig. 1

Fig. 2

Fig. 3

Europäisches
Patentamt

European
Patent Office

Office européen
des brevets

# EUROPEAN SEARCH REPORT

Application Number

EP 21 20 2798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 445 049 B1 (BELENOS CLEAN POWER HOLDING AG [CH]) 20 June 2018 (2018-06-20) * paragraphs [0041], [0045], [0048] - [0050], [0067] - [0069], [0071] * * claims 1,2 * | 1-15 | INV. H01M4/131 H01M4/48 |
| X | JP 2014 192159 A (BELENOS CLEAN POWER HOLDING AG) 6 October 2014 (2014-10-06) * paragraphs [0016] - [0017] * | 1-15 | |
| A | US 2014/178763 A1 (METTAN YOANN [CH]) 26 June 2014 (2014-06-26) * paragraphs [0010] - [0018] * | 1-15 | |

TECHNICAL FIELDS
SEARCHED     (IPC)

H01M

The present search report has been drawn up for all claims

| Place of search | Date of completion of the search | Examiner |
|---|---|---|
| Munich | 29 March 2022 | González Junquera, J |

EPO FORM 1503 03.82 (P04C01)

**EP 4 167 311 A1**

## ANNEX TO THE EUROPEAN SEARCH REPORT
## ON EUROPEAN PATENT APPLICATION NO.

EP 21 20 2798

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2022

| Patent document cited in search report | | | Publication date | Patent family member(s) | | | Publication date |
|---|---|---|---|---|---|---|---|
| EP 2445049 | | B1 | 20-06-2018 | AU | 2011236100 | A1 | 10-05-2012 |
| | | | | CN | 102456869 | A | 16-05-2012 |
| | | | | EP | 2445049 | A1 | 25-04-2012 |
| | | | | EP | 2698854 | A1 | 19-02-2014 |
| | | | | JP | 5711095 | B2 | 30-04-2015 |
| | | | | JP | 2012094516 | A | 17-05-2012 |
| | | | | KR | 20120047782 | A | 14-05-2012 |
| | | | | KR | 20130121799 | A | 06-11-2013 |
| | | | | TW | 201232896 | A | 01-08-2012 |
| | | | | US | 2012100402 | A1 | 26-04-2012 |
| | | | | US | 2014127562 | A1 | 08-05-2014 |
| JP 2014192159 | | A | 06-10-2014 | CN | 104078675 | A | 01-10-2014 |
| | | | | EP | 2784847 | A1 | 01-10-2014 |
| | | | | JP | 5760108 | B2 | 05-08-2015 |
| | | | | JP | 2014192159 | A | 06-10-2014 |
| | | | | KR | 20140117300 | A | 07-10-2014 |
| | | | | TW | 201504150 | A | 01-02-2015 |
| | | | | US | 2014295271 | A1 | 02-10-2014 |
| US 2014178763 | | A1 | 26-06-2014 | CN | 103887480 | A | 25-06-2014 |
| | | | | EP | 2747175 | A1 | 25-06-2014 |
| | | | | JP | 5763741 | B2 | 12-08-2015 |
| | | | | JP | 2014123564 | A | 03-07-2014 |
| | | | | KR | 20140081732 | A | 01-07-2014 |
| | | | | TW | 201431162 | A | 01-08-2014 |
| | | | | US | 2014178763 | A1 | 26-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2698854 A
- US 20170250449 A

- EP 2784847 A